(19) Europäisches Patentamt

European Patent Office

Office européen des brevets

(11) Veröffentlichungsnummer: **0 298 203 B1**

(12) **EUROPÄISCHE PATENTSCHRIFT**

(45) Veröffentlichungstag der Patentschrift: **09.09.92**

(51) Int. Cl.5: **H02G 7/00**, G08B 13/12, H02H 5/10

(21) Anmeldenummer: **88105575.0**

(22) Anmeldetag: **07.04.88**

(54) **Elektrische Überwachungseinrichtung zur Erfassung stabilitätsbeeinträchtigender Beschädigungen von Freileitungsmasten.**

(30) Priorität: **09.07.87 DE 3722742**

(43) Veröffentlichungstag der Anmeldung:
**11.01.89 Patentblatt 89/02**

(45) Bekanntmachung des Hinweises auf die Patenterteilung:
**09.09.92 Patentblatt 92/37**

(84) Benannte Vertragsstaaten:
**AT DE FR**

(56) Entgegenhaltungen:
**DE-A- 3 204 698**
**FR-A- 2 509 046**
**GB-A- 2 072 909**

(73) Patentinhaber: **SIEMENS AKTIENGESELL-SCHAFT**
**Wittelsbacherplatz 2**
**W-8000 München 2(DE)**

(72) Erfinder: **Lichtenberg, Alfred, Dipl.-Ing.**
**Dresdener Strasse 44**
**W-8525 Uttenreuth(DE)**
Erfinder: **Hussong, Wolfgang, Dipl.-Ing.**
**Dresdener Strasse 44**
**W-8525 Uttenreuth(DE)**

**Beschreibung**

Die Erfindung betrifft eine elektrische Überwachungseinrichtung zur Erfassung stabilitätsbeeinträchtigender Beschädigungen von Freileitungsmasten.

Durch die FR-A-2 509 046 sowie durch die korrespondierende DE-A-31 25 981 ist eine Überwachungseinrichtung bekannt, bei der piezoelektrische Wandler zur Umwandlung mechanischer Erschütterungen in elektrische Signale vorgesehen sind. Durch die piezoelektrischen Wandler werden von Manipulationen an Freileitungsmasten herrührende ungleichartige oder ungleiche Erschütterungen oder Schwingungen erfaßt und über eine nachgeschaltete Überwachungsschaltung ausgewertet. Um das Auslösen eines Fehlalarms aufgrund von betriebsbedingten Einwirkungen (Regen, Hagel, Wind, Seilschwingungen) zu verhindern, darf die bekannte Überwachungseinrichtung nur auf relativ starke mechanische Erschütterungen reagieren. Eine Beschädigung des Freileitungsmastes, die starke und häufige Erschütterungen vermeidet (z.B. Ansägen), kann deshalb nicht immer erkannt werden.

Bei der Überwachungseinrichtung gemäß der FR-A-2 509 046 können die Zuleitungen zu den piezoelektrischen Wandlern, welche Masterschütterungen erfassen sollen, gegen Unterbrechungen gesichert werden. Eine derartige Sicherung ist notwendig, da eine Unterbrechung der Zuleitungen nicht zur Anzeige einer Masterschütterung, sondern im Gegenteil zu überhaupt keiner Anzeige führt. Um die Einsatzfähigkeit der piezoelektrischen Wandler zu gewährleisten, muß also eine weitere Überwachungseinrichtung für die piezoelektrischen Wandler vorgesehen sein, die anzeigt, ob die piezoelektrischen Wandler der eigentlichen Überwachungseinrichtung einsatzbereit sind.

Eine schnelle selektive Erfassung von stabilitätsbeeinträchtigenden Beschädigungen ist insbesondere bei Gittermasten für über weite Entfernungen geführte Hoch- und Höchstspannungsfreileitungen für die Stromversorgung von wesentlicher Bedeutung, um eine selektive Anzeige des oder der betroffenen Maste vor Unterbrechung der Fernleitung beim Umlegen derselben in einem nächstgelegenen Umspannwerk zentral zu veranlassen und diese vorzugsweise zu registrieren, wobei zur Verunsicherung der die Beschädigungen vornehmenden Personen optische und/oder akustische Signale am betroffenen Mast gegebenenfalls zusätzlich ausgelöst werden sollen.

Der Erfindung liegt die Aufgabe zugrunde, mit einfachen Mitteln eine ohne unbeabsichtigte Fehlauslösung nur auf gezielte Störeingriffe sicher ansprechende Überwachungseinrichtung zu schaffen.

Die Lösung der gestellten Aufgabe gelingt erfindungsgemäß durch die Merkmale des Anspruches 1. Somit tritt ein Stromverbrauch innerhalb des Überwachungs- und/oder Signalgerätes nur bei Beschädigung des Leitersensors auf. Vorteilhafte Ausgestaltungen der Erfindung sind in den Ansprüchen 2 bis 14 beschrieben.

Im einfachsten Fall kann der beschädigte Leitersensor den Stromkreis eines fremdgespeisten Relais schließen und dieses in Selbsthaltung eine Zeitschaltung mit Taktgenerator oder dergleichen einschalten, die ihrerseits in bestimmten Zeitabständen akustische und/oder optische Signalmittel an jedem Mast in Tätigkeit setzt, die die betreffenden Personen von weiteren Handlungen abhalten und eventuell andere Personen auf die Störhandlungen aufmerksam machen sollen.

Zusätzlich oder für sich allein kann die Beschädigung eines Leitersensors auch zur Auslösung eines Überwachungsgerätes benutzt werden, das dabei ein dem jeweiligen Mast zugeordnetes kodiertes Signal über eine gesonderte Fernübertragungsleitung auf ein zentrales Empfangsgerät zur dekodierten Signalerfassung gibt.

Die Fernübertragungsleitung ist vorzugsweise an dem die Mastspitzen verbundenen Erdseil isoliert aufgehängt und verläuft parallel zu der spannungsführenden Freileitung. Bei Erdschluß in der Freileitung werden in der Fernübertragungsleitung Spannungen induziert, die bei längeren Freileitungsstrecken so erheblich werden können, daß die Signalübertragung in der Fernübertragungsleitung ungünstig beeinflußt oder gar unmöglich wird.

Um dies zu vermeiden, wird gemäß einer vorteilhaften Weiterbildung der Erfindung eine Unterteilung der Fernübertragungsleitung in einzelne voneinander entkoppelte Übertragungsabschnitte vorgesehen, die sich über eine geringere Anzahl von Masten erstrecken und die somit nur von unschädlichen Überspannungen bei Erdschluß beaufschlagt werden. Durch die Entkopplung wird erreicht, daß das von einem beschädigten Mast ausgesendete kodierte Signal in Richtung zur zentralen Empfangsstelle bis zur nächsten Entkopplungsstelle geleitet und von dort über die folgenden Übertragungsabschnitte potentialgetrennt zur zentralen Empfangsstelle gelangen.

Das jeweils im Abschnitt des beschädigten Mastes auftretende kodierte Signal wird nun in einem ausreichenden Zeitabschnitt der Empfangsstelle zugeleitet, damit die Fernübertragungsleitung danach für eventuelle Signale anderer später beschädigter Maste übertragungsbereit ist. Vorteilhafterweise kann für das ausgesendete Signal eine gegenüber der Netzfrequenz geringe Sendefrequenz von nur einem oder einigen Hertz ausreichen, wozu entsprechend einfacher aufgebaute Senderschaltungen genügen, zumal für die relativ einfache Information ausreichende Übertragungszeiten gegeben sind.

Als Leitersensor ist ein Drilleiter aus zwei isolierten eng verdrillten Leitern vorgesehen, deren freie Enden voneinander getrennt gehalten sind, in dem sie beispielsweise in einen festen Isolierkörper (härtbares Isolierharz) eingebettet werden. Die anderen Enden der beiden verdrillten Leiter jedes Leitersensors sind in am Mast angeordnete Abzweigkästen an Anschlußklemmen geführt, an die Verbindungsleiter mit gleichem technischen Aufbau wie die Sensorleiter zu dem am Mast angeordneten Signal- und/oder Überwachungsgerät angeschlossen sind.

Die Leitersensoren sind am jeweiligen Mast vom Sockel bis in eine außerhalb der Reichweite von Personen erstreckte Höhe abgedeckt, und nicht ohne Beschädigung entfernbar zu Anschlußkästen, geführt. Bei rohr- oder stabförmigen Masten sind mehrere Leitersensoren über den Mastumfang verteilt, z.B. in der Mastwand angeordnet oder bei Gittermasten an den einzelnen Eckstielen angeordnet, so daß beim Ansägen oder Sprengen eines Eckstieles oder bei einseitiger Beschädigung eines rohr- oder stabförmigen Mastes aus Schleuderbeton oder Stahlrohr die beiden verdrillten Leiter des Leitersensors an der Schadstelle zumindest vorübergehend kurzgeschlossen werden, was zum Ansprechen der Signal- und/oder Überwachungsgeräte führt.

Die Erfindung kann durch zusätzliche Maßnahmen nach Anspruch 8 oder 9 die Möglichkeit bieten, schon vor Beschädigungen eines Mastes durch entsprechende Fremdmanipulationen ein Ansprechen der Signal- und/oder Überwachungsgeräte auszulösen.

Die Erfindung ist nachfolgend anhand einiger Beispiele näher erläutert und in der Zeichnung vereinfacht dargestellt.

Es zeigen:

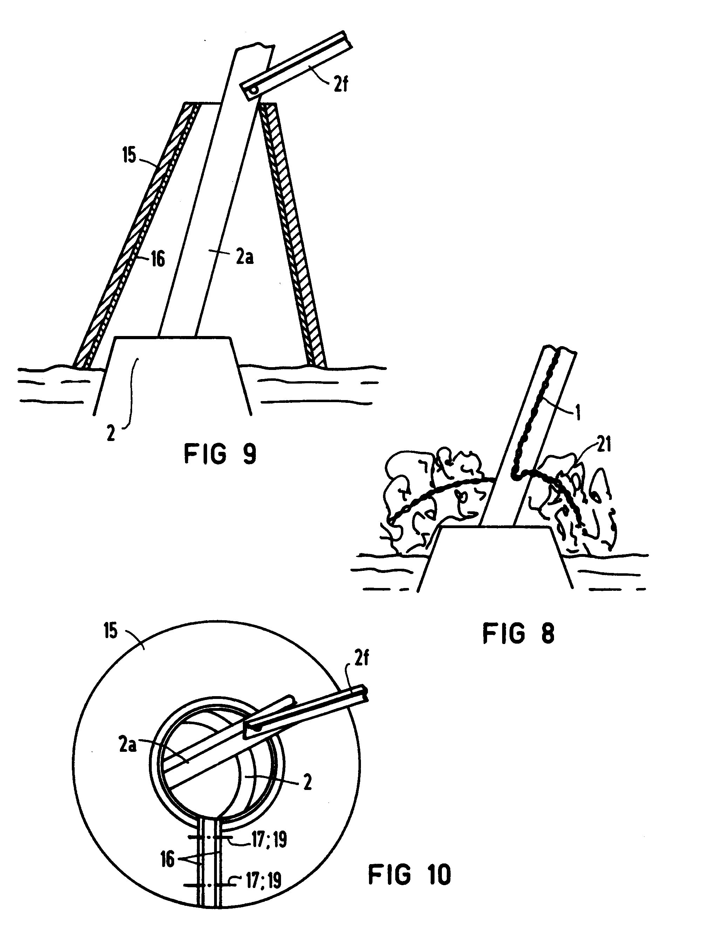

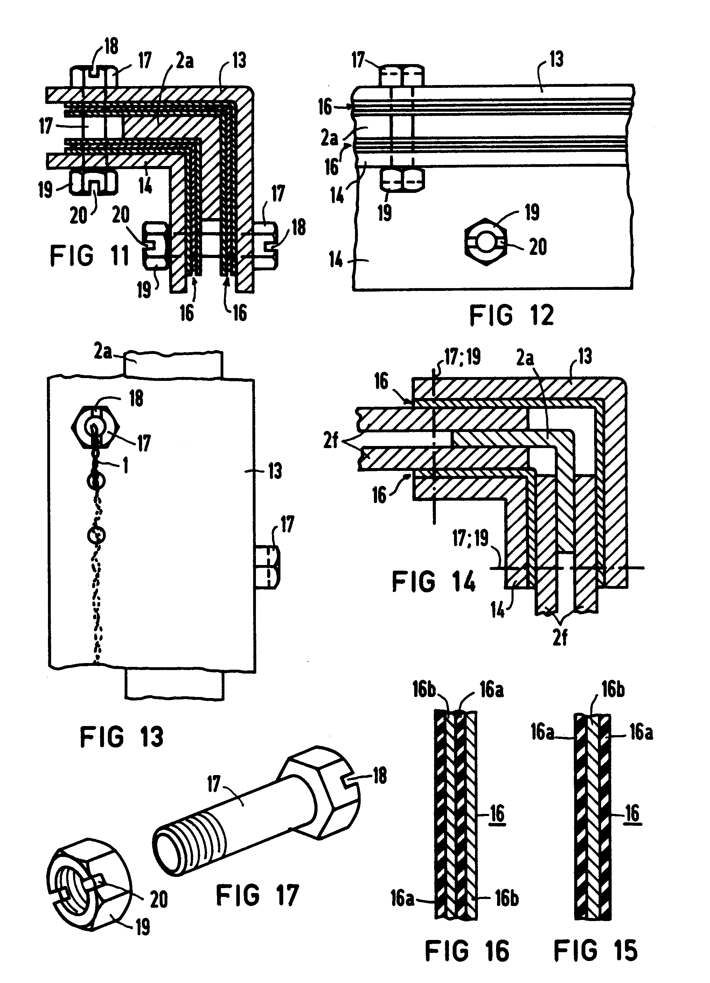

FIG 1
einen Leitersensor,
FIG 2
einen Gittermast mit vier Eckstielen samt Mastsockel im Querschnitt,
FIG 3
einen Ausschnitt eines aus geschraubten Teilen bestehenden Eckstieles mit angedeuteten Querstreben und zwei Teile verbindendes Knotenblech von der Seite,
FIG 4
eine an Schraubenköpfen befestigtes Schutzrohr für einen Leitersensor,
FIG 5
einen Querschnitt durch einen Eckstiel mit zwei Leitersensoren,
FIG 6
einen Übertragungsabschnitt mit Entkopplungsstellen für die Signal- und/oder Überwachungsgeräte der einzelnen Maste,
FIG 7
eine schematische Darstellung mit zu einem Übertragungsabschnitt gehörigen Gittermasten und einer zentralen Empfangsstelle,
FIG 8
einen Eckstiel mit Leitersensor-Stacheldraht-Gewirr,
FIG 9
eine einen Längsschnitt durch eine Schutzmanschette um einen Eckstiel,
FIG 10
eine Draufsicht auf den Gegenstand nach FIG 9,
FIG 11 und 14
je einen Querschnitt durch einen Eckstiel mit zwei Schutzwinkeln,
FIG 12 und 13
zwei Seitenansichten des Gegenstandes nach FIG 11,
FIG 15 und 16
zwei unterschiedlich geschichtete Sensorflächen,
FIG 17
eine Spezialschraubverbindung.

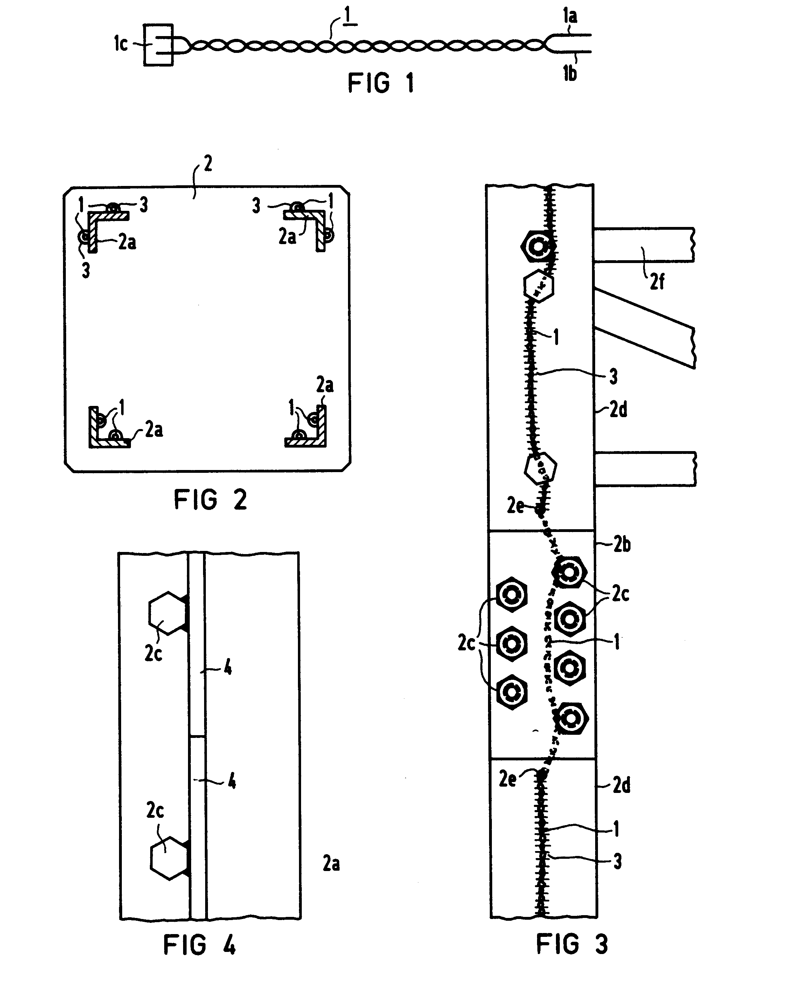

Der Leitersensor 1 besteht gemäß FIG 1 aus zwei isolierten Leitern 1a,1b, die bis auf die Enden eng verdrillt sind und deren freie Enden in einer Endisolierung 1c voneinander beabstandet gehalten sind. Die kappenartige Endisolierung 1c kann aus härtbarem Gießharz bestehen. Die Länge des Leitersensors 1 ist so bemessen, daß er vom Mastsockel bis zu Abzweigkästen in eine Masthöhe reicht, die außerhalb der normalen Reichweite von Personen und eventuellen Erhöhungen (Leitern und dergleichen) liegt. Das isolierte Ende ist dabei dem Mastsockel 2 in FIG 2 zugewandt.

Bei Gittermasten nach FIG 2 mit vier Eckstielen 2a aus Winkelprofileisen, die gemäß FIG 3 durch Querstreben verbunden sind, ist jeder Schenkel mit einem Leitersensor 1 bestückt. Jeder Eckstiel 2a besteht gemäß FIG 3 aus mittels Knotenblechen 2b durch Schraubverbindung 2c zusammengesetzten Teilstücken 2d, die ihrerseits mit den Querstreben 2f verschraubt sind.

In den Teilstücken 2d sind Öffnungen 2e vorgesehen, durch die die Leitersensor 1 von der Innenseite zur Außenseite und umgekehrt abwechselnd straff anliegend gesteckt sind. Die Schraubenköpfe bzw. Schraubenmuttern der Schraubverbindungen 2c sind mit Querbohrungen versehen, durch die die Leitersensoren 1 hindurchgeführt sind, so daß beim Lösen der betreffenden Schraubverbindungen 2c eine signalauslösende Beschädigung der betreffenden Leitersensoren 1 erfolgt.

Zwischen den Öffnungen 2e bzw. den Schraubverbindungen 2c können für die betreffenden Abschnitte der Leitersensoren 1 schützende Abdeckungen 3, beispielsweise in Form von die Leitersensoren 1 überdeckenden Spachtelmassen vorgesehen sein. Statt einer Verspachtelung der Leitersensoren 1 nach FIG 2,3 und 5, wobei im letztgenannten Fall die Leitersensoren 1 in stirnseitigen Nuten der beiden Schenkel angeordnet sind, können auch Blechabdeckungen vorgesehen sein. Besonders vorteilhaft ist es, gemäß FIG 4 Schutzrohre 4 für die Aufnahme von Leitersensoren zu verwenden, die entweder mit den Eckstielen 2a oder den Schraubenköpfen der Schraubverbindungen 2c fest verbunden sind, z.B. durch Schweißen oder Kleben.

Die Anbringung der Leitersensoren 1 an den Schenkeln der Eckstiele 2a ist jedenfalls so getroffen, daß unabhängig von der Beschädigungsart und der Beschädigungsstelle eine leiterschleifenbildende Trennung eines Leitersensors 1 schon vor dem Auseinanderbrechen des beschädigten Eckstiels 2a eintritt.

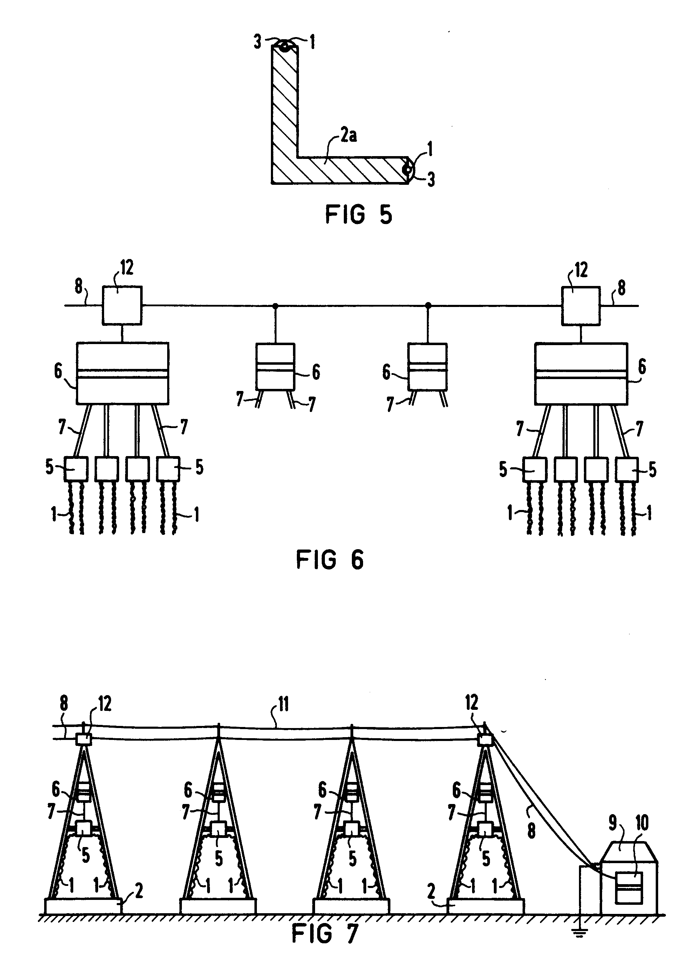

Die Leitersensoren 1 der einzelnen Eckstiele 2a eines Gittermastes sind gemäß FIG 6 an Abzweigkästen 5 geführt, die außer Reichweite am Gittermast befestigt sind und die mit zu den Signal- und/oder Überwachungsgeräten 6 des betreffenden Mastes durch Verbindungsleitungen 7 elektrisch verbunden sind.

Die Leitersensoren 1 der Eckstiele 2a eines Gittermastes sind über die Verbindungsleitungen 7 in Parallelschaltung mit dem im oberen Teil des Mastes angeordneten Signal- und/oder Überwachungsgerät 6 verbunden, das über von Solarzellen im geladenen Zustand gehaltene Batterien fremdgespeist wird und eine Sendeeinrichtung für kodierte Mastsignale bei Auslösung durch einen beschädigten Leitersensor zum Ansprechen bringt, die ihre relativ niederfrequenten Signale auf eine Ferübertragungsleitung 8 zu einer zentralen Empfangsstelle 9 auf ein dort angeordnetes, dekodierendes Empfangsgerät 10 sendet. Die Fernübertragungsleitung 8 ist am Erdseil 11 isoliert aufgehängt und verläuft parallel zu den nicht dargestellten Freileitungen.

Jeder Sender besteht beispielsweise aus einem Taktgenerator mit nachgeschaltetem Schieberegister und einer Kodierschaltung zur Erzeugung einer bestimmten seriellen asynchronen Signalfolge (Datenworte). Der Ausgang der Kodierschaltung steuert entsprechend ein Senderelais oder Optokoppler. Ein Zähler stoppt automatisch den Taktgenerator nach einer festgelegten Anzahl von Datenwörtern.

Somit kann jedem Mast ein bestimmtes Signal zugeordnet und dieses im Empfangsgerät leicht erkannt werden.

Damit bei längeren Übertragungsstrecken im Erdschlußfall keine schädlichen Überspannungen in der Fernübertragungsleitung 8 induziert werden können, die die einwandfreie Signalübertragung in Frage stellen, wird eine Unterteilung der Überwachungsleitung in voneinander galvanisch entkoppelte kürzere Abschnitte vorgesehen, wobei z.B. durch Entkopplungsgeräte 12 an beispielsweise jeden vierten Mast entsprechend FIG 7 vorgesehen sind, die mittels Relais oder Optokopplern die einzelnen Abschnitte galvanisch trennen, jedoch die Signale von Abschnitt zu Abschnitt an die Empfangsstelle 9,10 einwandfrei gelangen lassen, da in den kurzen Abschnitten zwischen zwei Entkopplungsgeräten keine schädlichen Überspannungen auftreten können. Die Fernübertragungsleitung 8 wird zweckmäßigerweise als abgeschirmte Leitung, deren Schirmung entsprechend geerdet ist, ausgeführt, um kapazitive Spannungseinflüsse auszuschließen.

In den genannten Beispielen sind die Leitersensoren in den Masten bzw. Eckstielen unmittelbar angebracht und werden nur durch Manipulationen an den Masten bzw. Eckstielen selbst so beschädigt, daß ein Ansprechen der Überwachungseinrichtung erfolgt.

In weiterer Ausbildung der Erfindung soll eine Auslösung der Überwachungseinrichtung auch ohne Beschädigung der Maste bzw. Eckstiele erfolgen können, wenn Manipulationen zur Beschädigung der Schützlinge vorgenommen werden.

Dies gelingt durch die Anordnung nach FIG 8 dadurch, daß die im Mastsockel 2 eingebetteten Eckstiele 2a mit einem Gewirr aus Stacheldraht 21 umgeben sind, der von einem Stacheldrahtvorrat abgenommen und dabei laufend mit dem ebenfalls von einem Vorratswickel abgewickelten Leitersensor 1 so ineinander verlegt wird, daß beim Auseinanderreißen bzw. Zerschneiden des Stacheldrahtes 21 auch eine leiterschleifenbildende Beschädigung des Leitersensors 1 unvermeidlich ist. Der in das Stacheldrahtgewirr eingewickelte Leitersensor ist elektrisch leitend mit dem im Eckstiel eingebetteten Leitersensor 1 verbunden, der wie bereits dargelegt, an das Überwachungs- und/oder Signalgerät 6 (FIG 7) angeschlossen ist.

Zum gleichzeitigen Verlegen von Stacheldraht und Leitersensor können beide auf einem fahrbaren Verlegungsgerät in gesonderten Behältnissen als Vorratswickel untergebracht sein und von diesen gemeinsamen ineinander laufend um die Eckstiele bzw. Maste verlegt werden.

Eine andere Möglichkeit der Überwachung von Manipulationen am Mast bereits vor Eingriff am Mast selbst ist durch Anordnung von die Maste bzw. Eckstiele mit Abstand umgebenden Schutzmanschetten in vorzusweise kegelförmiger Ausführung nach FIG 9 und 10 gegeben.

Sie erlaubt eine Sicherung der Maste gegen Sprengstoffanschläge schon allein oder gar in Verbindung mit der Ausführung nach FIG 8.

Die einstückige, geschlitzte kegelförmige Schutzmanschette 15 aus Metall oder Isolierwerkstoff ist innenseitig mit einer geschichteten Sensorfläche 16 verklebt, die mit dem Leitersensor 1 im Eckstiel 2a elektrisch verbunden ist. Die Verbindung des Leitersensors 1 mit der vom Werkstoff der Schutzmanschette abhängig aufgebaute Sensorfläche 16 ist durch eine spezielle Schraubverbindung 17,19 so geführt, daß bei Zerstörung der Schraubverbindung oder auch beim Lösen derselben eine die Auslösung des Signal- und/oder Überwachungsgerätes 6 (in FIG 7) bewirkende Leiterschleife gebildet wird. Die Schutzmanschette 15 umgibt den Eckstiel 2a um dessen Mastsockel 2 und stützt sich am Boden ab. Am oberen offenen Ende ist der Eckstiel 2a herausgeführt und mit Querstreben 2f verschraubt. Am durchgehenden Schlitz sind die in FIG 17 gezeigten und dort näher beschriebenen Schraubverbindungen vorgesehen.

Anstelle einer den Mast mit Abstand umgebenden Schutzmanschette kann auch eine aus zwei verschraubten Schutzwinkeln gebildete Schutzanordnung aus Metall oder Isolierwerkstoff gemäß den FIG 11,12 13 und 14 am Mast (Eckstiel) vorgesehen sein.

Die FIG 11 bis 13 zeigen eine solche Schutzanordnung am Eckstiel 2a, FIG 14 an höher glegenen Verbindungsstellen des Eckstieles mit Querstreben 2f.

Um den Eckstiel 2a mit Winkelprofil sind innenseitig mit Sensorflächen 16 verklebte äußere und innere Schutzwinkel 13,14 durch mehrere Schraubverbindungen 17,19 bedeckend angepreßt und mit einem durch die Hohlschraube 17 geführten Leitersensor 1 in nicht gezeigter Weise elektrisch verbunden. Jeder Leitersensor ist durch eine Stirnnut 18 bzw.20 im Schraubenkopf bzw. in der Mutter 19 versenkt seitlich eingeführt.

Beim Lösen der Mutter oder der Schraube und/oder beim Zerstören der Hohlschraube 17 wird der Leitersensor 1 im Sinne einer Signalauslösung beschädigt. Beim Zerstören einer oder beider Schutzwinkel 13,14 oder der Schutzmanschette 15 wird die Sensorfläche 16 im entsprechenden Sinne verändert. Bei Schutzmanschetten bzw. Schutzwinkeln aus Metall, insbesondere Aluminium ist die Sensorfläche 16 gemäß FIG 15 dreischichtig, und zwar besteht sie aus einer mittleren Leiterfläche 16b aus Metallfolie oder Metallgeflecht, die beidseitig durch Isolierfolie 16a abgedeckt und mit diesen zu einer biegsamen Einheit verklebt ist.

Bei Schutzmanschetten bzw. Schutzwinkel aus Isolierwerkstoff (Kunststoff) ist die Sensorfläche 16 nach FIG 16 vierschichtig, und zwar abwechselnd aus Metallfolie oder -geflecht 16b und Isolierfolie 16a. Dabei ist die außenliegende Metallschicht 16b mit der Innenseite der Schutzmanschette 15 bzw. der Schutzwinkel 13,14 verklebt.

Die beiden Drähte des Leitersensors 1 sind bei metallischen Schraubenanordnungen an die einzige Leiterfläche 16b und an die Schutzanordnung angeschlossen, dagegen bei nichtleitenden Schutzwinkeln bzw. Schutzmanschetten mit den beiden Leiterflächen 16b der Sensorfläche 16 nach FIG 16 elektrisch verbunden, zu denken.

**Patentansprüche**

1. Elektrische Überwachungseinrichtung zur Erfassung stabilitätsbeeinträchtigender Beschädigungen von Freileitungsmasten, wobei an und/oder in jedem Freileitungsmast mindestens ein Leitersensor (1) vorgesehen ist, der sich vom Mastsockel (2) bis zu einer außerhalb der Reichweite von Personen reichenden Höhe erstreckt und gegen Wegnahme geschützt derart ein Mast befestigt ist, daß eine Beschädigung des Mastes zu einer Beschädigung des Leitersensors führt, sowie mit einem außerhalb der Reichweite von Personen im Mast angeordneten fremdstrombetriebenen Überwachungs- und/oder Signalgerät (6) derart in Auslöseabhängigkeit elektrisch verbunden ist, daß nur bei Beschädigung mindestens eines Leitersensors (1) die Überwachungs- und/oder Signalgeräte betätigt werden.

2. Überwachungseinrichtung nach Anspruch 1,
**dadurch gekennzeichnet**,
daß leitersensorabhängige Überwachungsgeräte (6) der einzelnen Maste über eine Fernübertragungsleitung (8) für mastkennzeichnende Signale mit einem zentralen Empfangsgerät (10) zur dekodierenden Signalerfassung verbunden sind.

3. Überwachungseinrichtung nach Anspruch 1 und 2,
**dadurch gekennzeichnet**,
daß jeweils mehrere Maste mit ihren Überwachungsgeräten (6) mit einem Fernübertragungsleitungsleitungsabschnitt verbunden und die einzelnen Fernübertragungsleitungsabschnitte gegeneinander galvanisch entkoppelt sind, so daß die Signale über mechanische und/oder elektronische Entkopplungsgeräte (12) potentialgetrennt zum zentralen Empfangsgerät (10) übertragen werden.

4. Überwachungseinrichtung nach Anspruch 3,
**dadurch gekennzeichnet**,
daß als Entkopplungsgeräte (12) Relais oder Optokoppler vorgesehen sind.

5. Überwachungseinrichtung nach Anspruch 1,
**dadurch gekennzeichnet**,
daß jeder Leitersensor (1) aus zwei eng verdrillten isolierten Leitern (1a,1b) besteht, die bei Beschädigung des Mastes an der Schadstelle eine Leiterschleife bilden.

6. Überwachungseinrichtung nach Anspruch 1 und 5 für Gittermaste mit geschraubten Eckstielen mit L-förmigem Querschnitt, **dadurch gekennzeichnet**, daß jeder Leitersensor (1) vom Mast (2) aus beginnend abwechselnd abschnittsweise an der Innen- und der Außenseite des Eckstiels (2a) nach außen abgedeckt angebracht ist und durch Öffnungen (2e) in den Eckstielen (2a) sowie den Schraubenköpfen und Schraubenmuttern der Schraubverbindungen (2c) geführt sind.

7. Überwachungseinrichtung nach Anspruch 6, **dadurch gekennzeichnet**, daß an Schraubenköpfen Schutzrohre (4) befestigt sind, durch die Leitersensoren (1) geführt sind.

8. Überwachungseinrichtung nach mindestens einem der vorhergehenden Ansprüche 1 bis 6, **dadurch gekennzeichnet**, daß der Leitersensor (1) am Fuß des Mastes herausgeführt und in ein den Mast am Boden umgebendes Stacheldrahtgewirr (21) eingewickelt ist.

9. Überwachungseinrichtung nach mindestens einem der vorhergehenden Ansprüche 1 bis 7, **dadurch gekennzeichnet**, daß der im Mast hochgeführte Leitersensor (1) mit einer den Mastfuß einschließenden, durch Schraubverbindungen (17,18) zusammengefügten Schutzanordnung (13,14,15) mit Sensorfläche (16) elektrisch leitend verbunden und durch die Schraubverbindungen (17,18) an die dem Mast zugewandte Sensorfläche (16) herangeführt ist.

10. Überwachungseinrichtung nach Anspruch 9, **dadurch gekennzeichnet**, daß die Schutzanordnung als zylinder- oder kegelförmige Schutzmanschette (15) mit innerer Sensorfläche (16) mit Abstand um den Mastfuß am Boden (2) abgestützt ist.

11. Überwachungseinrichtung nach Anspruch 9, **dadurch gekennzeichnet**, daß die Schutzanordnung aus zwei innenseitig mit Sensorflächen (16) bedeckten und durch Schraubverbindungen (17,18,19,20) am Mastfuß gehaltenen Schutzwinkeln (13,14) gebildet ist.

12. Überwachungseinrichtung nach einem der Ansprüche 9 bis 11, **dadurch gekennzeichnet**, daß bei elektrisch leitfähigen Schutzanordnungen die Sensorfläche (16) aus einer zwischen zwei Isolierflächen (16a) eingebetteten Leiterfläche (16b) in Form einer Folie oder eines Metallgewebes gebildet und diese geschichtete zusammengehaltene Sensorfläche mit der Innenfläche der Schutzmanschette bzw. der Schutzwinkel verklebt ist.

13. Überwachungseinrichtung nach einem der Ansprüche 9 bis 11, **dadurch gekennzeichnet**, daß bei Schutzanordnungen aus Isolierwerkstoff die Sensorfläche (16) aus je zwei Leiterflächen (16b) und Isolierflächen (16a) in abwechselnder Schichtung als flächige Einheit gebildet und die äußere Leiterfläche (16b) mit der Innenfläche der Schutzanordnung (13,14,15) verklebt ist.

14. Überwachungseinrichtung nach einem der Ansprüche 9 bis 11, **dadurch gekennzeichnet**, daß die Schraubverbindung (17,19) aus einer Hohlschraube (17) mit einer quererstreckten Stirnnut (18) sowie einer Mutter (19) mit quererstreckter Stirnnut (20) besteht, wobei die Stirnnuten (18,20) zur versenkten Aufnahme des durch die Hohlschraube (17) geführten Leitersensors (1) vorgesehen sind.

**Claims**

1. An electric monitoring device for detecting damage to transmission towers which impair the stability, wherein provided on and/or in each transmission tower there is at least one conductor sensor (1), which extends from the tower base (2) to a height extending beyond the reach of people and is secured to the tower, protected against being removed, such that damage to the tower results in damage to the conductor sensor, and which is connected electrically, dependent on triggering, to a monitoring and/or signal apparatus (6), operated by external current, and arranged in the tower beyond the reach of people, such that only when there is damage of at least one conductor sensor (1) are the monitoring and/or signal apparatus activated.

2. A monitoring device according to claim 1, characterised in that monitoring apparatus (6), dependent on the conductor sensor, of the individual towers, are connected by way of a remote transmission line (8) for tower-characterising signals to a central receiving apparatus (10) for decoded signal detection.

3. A monitoring device according to claim 1 and 2, characterised in that in each case several towers are connected with their monitoring apparatus (6) to a remote transmission line section and the individual remote transmission line sections are decoupled galvanically relative to each other so that the signals are transmitted by way of mechanical and/or electronic decoupling apparatus (12) isolated from the central receiving apparatus (10).

4. A monitoring device according to claim 3, characterised in that relays or optical couplers are provided as decoupling apparatus (12).

5. A monitoring device according to claim 1, characterised in that each conductor sensor (1) consists of two tightly twisted insulated conductors (1a, 1b), which form a conductor loop at the point of damage when the tower is damaged.

6. A monitoring device according to claim 1 and 5, for lattice towers with screwed main legs with an L-shaped cross-section, characterised in that each conductor sensor (1) starting from the tower (2) is attached alternately in sections to the inner and the outer side of the main leg (2a) covered outwards and guided through openings (2e) in the main legs (2a) as well as in the screw heads and screw nuts of the screwed connections (2c).

7. A monitoring device according to claim 6, characterised in that protective tubes (4) are secured to the screw heads, through which conductor sensors (1) are guided.

8. A monitoring device according to at least one of the preceding claims 1 to 6, characterised in that the conductor sensor (1) at the foot of the tower is led out and wound into a barbed wire tangle (21) surrounding the tower at the base.

9. A monitoring device according to at least one of the preceding claims 1 to 7, characterised in that the conductor sensor (1) guided vertically in the tower is connected in an electrically conductive manner to a protective arrangement (13,14,15), with sensor face (16), which is joined together by screwed connections (17,18) and which encloses the tower foot, said sensor being led through the screwed connections (17, 18) to the sensor face (16) facing the tower.

10. A monitoring device according to claim 9, characterised in that the protective arrangement, in the form of a cylindrical or cone-shaped protective collar (15) with an inner sensor face (16), is supported with clearance at the base (2) around the tower foot.

11. A monitoring device according to claim 9, characterised in that the protective arrangement is formed from two protective corners (13,14) held at the tower foot by screwed connections (17, 18, 19, 20) and covered inside with two sensor faces (16).

12. A monitoring device according to one of claims 9 to 11, characterised in that in electrically conductive protective arrangements the sensor face (16) is formed from a conductor face (16b) embedded between two insulating faces (16a), in the form of a foil or metal gauze, and this layered sensor face held together is adhered to the inner face of the protective collar or of the protective corners.

13. A monitoring device according to one of claims 9 to 11, characterised in that in protective arrangements of insulating material the sensor face (16) is formed from in each case two conductor faces (16b) and insulating faces (16a) in alternating layers as a two-dimensional unit and the outer conductor face (16b) is pasted to the inner face of the protective arrangement (13,14,15)

14. A monitoring device according to one of claims 9 to 11, characterised in that the screwed connection (17,19) consists of a hollow screw (17) with a transversely extended front groove (18) as well as a nut (19) with a transversely extended front groove (20), wherein the front grooves (18, 20) are provided for countersunk reception of the conductor sensor (1) led through the hollow screw (17).

**Revendications**

1. Dispositif électrique de contrôle pour détecter des endommagements, qui affectent la stabilité, de pylônes de lignes aériennes, et dans lequel il est prévu sur et/ou dans chaque pylône de ligne aérienne, au moins un capteur (1) formé d'un conducteur qui s'étend depuis la base (2) du polygone jusqu'à une hauteur hors d'atteinte de personnes et est fixé sur le pylône en étant protégé contre tout enlèvement par le fait qu'un endommagement du pylône conduit à un endommagement du capteur formé d'un conducteur, et est raccordé électriquement à un appareil de contrôle et/ou de signalisation (6), qui est alimenté par un courant extérieur et qui est disposé sur le pylône hors d'atteinte de personnes, et ce en fonction d'un déclenchement de telle sorte que les appareils de contrôle et/ou de signalisation sont activés uniquement dans le cas d'un endommagement d'au moins un capteur (1) formé d'un conducteur.

2.    Dispositif de contrôle suivant la revendication 1, caractérisé par le fait que les dispositifs de contrôle (6), qui dépendent des capteurs formés de conducteurs, des différents pylônes sont reliés par l'intermédiaire d'une ligne de transmission à distance (8) servant à transmettre des signaux caractérisant les pylônes, à un dispositif central de réception (10) pour la détection des signaux avec décodage.

3.    Dispositif de contrôle suivant les revendications 1 et 2, caractérisé par le fait que respectivement plusieurs pylônes sont raccordés, par leurs appareils de contrôle (6), à une section de transmission à distance et que les différentes sections de la ligne de transmission à distance sont découpées galvaniquement les unes par rapport aux autres de sorte que les signaux sont transmis, avec séparation de potentiel, à l'appareil central de réception (10), par l'intermédiaire d'appareils de découplage mécaniques et/ou électriques.

4.    Dispositif de contrôle suivant la revendication 3, caractérisé par le fait qu'il est prévu des relais et des optocoupleurs en tant qu'appareils de découplage (12).

5.    Dispositif de contrôle suivant la revendication 1, caractérisé par le fait que chaque capteur (1) formé d'un conducteur est constitué de deux conducteurs isolés (1a,1b) qui, dans le cas d'un endommagement du pylône, forment une boucle de conducteur au niveau du point d'endommagement.

6.    Dispositif de contrôle suivant la revendication 1 et 5 pour des pylônes en treillis comportant des cornières d'angle vissées possédant une section transversale en forme de L, caractérisé par le fait que chaque capteur (1) formé d'un conducteur est installé, en étant masqué vers l'extérieur, alternativement et par sections, à partir du pylône (2), sur la face intérieure et sur la face extérieure de la cornière d'angle (2a) et traverse des ouvertures (2e) ménagées dans les cornières d'angle (2a) ainsi que dans les têtes de vis et les écrous des liaisons à vis (2c).

7.    Dispositif de contrôle suivant la revendication 6, caractérisé par le fait que sur les têtes de vis sont fixés des tubes de protection (4) dans lesquels s'étendent les capteurs (1) formés de conducteurs.

8.    Dispositif de contrôle suivant au moins l'une des revendications précédentes 1 à 6, caractérisé par le fait que le capteur (1) formé d'un conducteur ressort au niveau du pied du pylône et est enroulé dans un enchevêtrement de fils barbelés (21) entourant la base du pylône.

9.    Dispositif de contrôle suivant au moins l'une des revendications précédentes 1 à 7, caractérisé par le fait que le capteur (1) formé d'un conducteur, qui s'élève à l'intérieur du pylône est raccordé de façon électriquement conductrice à un dispositif de protection (13,14,15) qui enserre le pied du pylône, est assemblé au moyen de liaisons à vis (17,18) et comporte une surface de détection (16), et est appliqué par les liaisons à vis (17,18) contre la surface de détection (16) tournée vers le pylône.

10.   Dispositif de contrôle suivant la revendication 9, caractérisé par le fait que le dispositif de protection prend appui, sous la forme d'un manchon cylindrique ou conique de protection (15), par sa surface intérieure de détection (16) sur la base (2), à distance autour du pied du pylône.

11.   Dispositif de contrôle suivant la revendication 9, caractérisé par le fait que le dispositif de protection est formé par deux cornières de protection (13,14) recouvertes sur leur face intérieure par des surfaces de détection (16) et maintenues par des liaisons à vis (17,18,19,20) sur le pied du pylône.

12.   Dispositif de contrôle suivant l'une des revendications 9 à 11, caractérisé par le fait que dans le cas de dispositifs de protection électriquement conducteurs, la surface de détection (16) est formée par une surface conductrice (16b), qui est insérée entre deux surfaces isolantes (16a) et se présente sous la forme d'une feuille ou d'un tissu métallique et que cette surface de détection formée de couches superposées maintenues réunies est collée à la surface intérieure du manchon de protection ou des cornières de protection.

**13.** Dispositif de contrôle suivant l'une des revendications 9 à 11, caractérisé par le fait que, dans le cas de dispositifs de protection réalisés en un matériau isolant, la surface de détection (16) est constituée respectivement par deux surfaces conductrices (16b) et deux surfaces isolantes (16a) empilées selon un empilage alterné, sous la forme d'une unité plate et que la surface conductrice extérieure (16b) est collée sur la surface intérieure du dispositif de protection (13,14,15).

**14.** Dispositif de contrôle suivant l'une des revendications 9 à 11, caractérisé par le fait que la liaison à vis (17,19) est constituée par une vis creuse (17) possédant une rainure frontale transversale (18), et par un écrou (19) possédant une rainure frontale transversale (20), les rainures frontale (18,20) étant prévues pour recevoir en renfoncement le capteur (1) formé d'un conducteur, qui traverse le vis creuse (17).

EP 0 298 203 B1

FIG 1

FIG 2

FIG 4

FIG 3

FIG 5

FIG 6

FIG 7

11

FIG 9

FIG 8

FIG 10

FIG 11

FIG 12

FIG 13

FIG 14

FIG 17

FIG 16

FIG 15